# EUROPEAN PATENT SPECIFICATION

(11) **EP 1 230 296 B1**
(45) Date of publication and mention of the grant of the patent: **27.07.2005**
(21) Application number: 00975990.3
(22) Date of filing: 03.11.2000
(51) Int. Cl.: C08J 9/12, B29B 7/48, B29C 47/40, B29C 44/20

(54) **A METHOD FOR PRODUCING EXPANDED POLYMERIC MATERIALS AND AN EXTRUDER FOR CARRYING IT OUT**
VERFAHREN ZUR HERSTELLUNG VON GESCHÄUMTEN KUNSTSTOFFEN UND VORRICHTUNG ZUR DURCHFÜHRUNG DES VERFAHRENS
PROCEDE DE PRODUCTION DE MATIERES POLYMERES EXPANSEES ET EXTRUDEUSE POUR SA MISE EN OEUVRE

(30) Priority: 09.11.1999 IT TO990959
(43) Date of publication of application: 14.08.2002
(73) Proprietor: L.M.P. Impianti S.R.L., 10088 Volpiano (Torino) (IT)
(72) Inventor: CRANA, Renato, I-10143 Torino (IT)
(74) Representative: Rambelli, Paolo
(86) International application number: PCT/EP2000/010845
(87) International publication number: WO 2001/034687

(56) References cited:
- EP-A- 0 430 292
- WO-A-98/51467
- GB-A- 1 231 535
- US-A- 4 324 493
- US-A- 4 352 892

## Description

The present invention relates to a method for the production of low-density, polyolefin expanded polymeric materials with a closed cell structure, by extruding the polymer with an added physical expansion agent, and to an extruder for carrying out the method.

The most commonly used expansion agents in the production of low-density polyolefinic foams are organic compounds including fluorocarbons, in particular saturated chloro fluorocarbons (CFC) and hydrochlorofluorocarbons (HCFC) and other halogenated hydrocarbons. Such chlorofluorocarbons are viewed as undesirable, however, owing to their negative impact on the environment and, in particular, because they are suspected of being responsible for destroying the protective ozone layer of the Earth's atmosphere and are thus being gradually phased out of use. Other halogenated hydrocarbons which do not damage the ozone layer are used, but their use as expansion agents involves other problems since they are highly inflammable.

Inorganic expansion agents have been suggested to replace CFC's and HCFC's, such as carbon dioxide, nitrogen, argon and water, for example, which are not inflammable and would have little or no impact on the environment. However, when such agents are used by themselves, as single expansion agents, it is not usually possible to obtain foams with the desired density, such as would be achieved using conventional expansion agents. Research in the art has thus turned towards using specific expansion systems, based on a combination of several expansion agents, towards choosing polymeric materials with specific physical characteristics and towards the use of additives.

U.S. Patent 5 244 927 describes low-density polystyrene foams manufactured using an expansion system constituted by a combination of carbon dioxide, a lower alcohol and water.

U.S. Patent 5 554 661 describes closed-cell expanded ethylene polymer materials with a density that is lower than 150 kg/m³, obtained using an ethylene polymer having specific melt index and melt tension characteristics and carbon dioxide and/or argon as expansion agents.

The present invention relates on the other hand to a method for producing expanded polyolefin materials with the desired characteristics of low density and low thermal conductivity even when using single expansion agents such as carbon dioxide, inert gases or water, thanks to an extrusion method having particular physical and mechanical characteristics.

More specifically the present invention relates to a method for the production of expanded material and the associated extruder having the features disclosed in the preambles of claim 1 and 7, respectively. WO-A-98 51 467 discloses such a method and apparatus.

Moreover, US-A-4 352 892 discloses a device for the extrusion of thermoplastic foams and GB-A-1 231 535 discloses a process and an apparatus for manufacturing articles of expanded thermoplastic resin.

One object of the invention is to provide a method for the production of expanded polyolefin materials having the features indicated in claim 1. Preferred features of such method are indicated in dependent claims 2-6.

The polyolefin polymers used in the method of the invention include polyoleifins such as polyethylene, polypropylene and their copolymers and aromatic alkenyl polymers. The last include polymers of aromatic alkenyl compounds such as styrene, α-methylstyrene, ethyl styrene, vinyl benzene, vinyl toluene, chlorostyrene and bromo benzene. Polymers that can be used include small quantities of unsaturated monoethylene compounds such as C₂-C₆ alkylylic acids or C₄-C₆ dienes which can be copolymerized with the aromatic alkenyl compound, such as acrylic acid, methacrylic acid, acrylonitrile, maleic anhydride, methyl acrylate, ethyl acrylate and vinyl acetate. Use of such copolymers is not particularly desirable, however, since it substantially increases raw material costs.

The method of the invention is particularly advantageous when using expansion agents such as carbon dioxide, nitrogen, argon and helium; however the scope of the invention also extends to the use of aliphatic compounds such as methane, ethane, propane, n-butane, isobutane and n-pentane and aliphatic alcohols with from 1 to 3 carbon atoms. Also included within the scope of the invention is a method using conventional CFC's and HCFC's. The polymeric material can also include the usual additives used in the extrusion of expanded materials, such as nucleising agents, flame-retardants and colourings. Nucleising agents, used to control the dimension of the cells in foam, include in particular talc, magnesium oxide, calcium silicate, calcium stearate and mixtures of citric acid and sodium bicarbonate.

A further object of the invention is to provide an extruder for carrying out the method described above, having the features indicated in claim 7. Preferred features of such extruder are indicated in dependent claims 8 and 9.

Further characteristics and advantages of the invention will become apparent from the detailed description which follows, with reference to the appended drawings showing specific embodiments by way of non-limitative example, and in which:
Figure 1 is a schematic sectioned view showing a series of components of an extrusion plant for carrying out the invention,
Figure 2 is a sectioned side view of a die arranged downstream of the components of the extrusion apparatus of Figure 1,
Figures 3 and 4 are sections taken on the lines III-III and IV-IV respectively of Figure 2,
Figure 5 is a front view of the die of Figure 2,
Figure 6 is a section taken on the line VI-VI of Figure 2, and
Figure 7 is a side elevation of one of the screws of the extrusion plant for carrying out the invention.

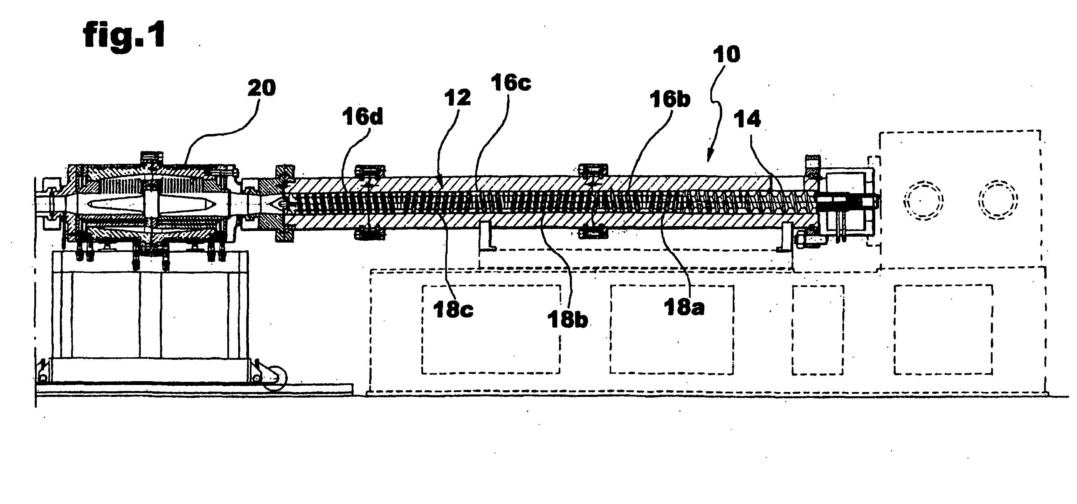

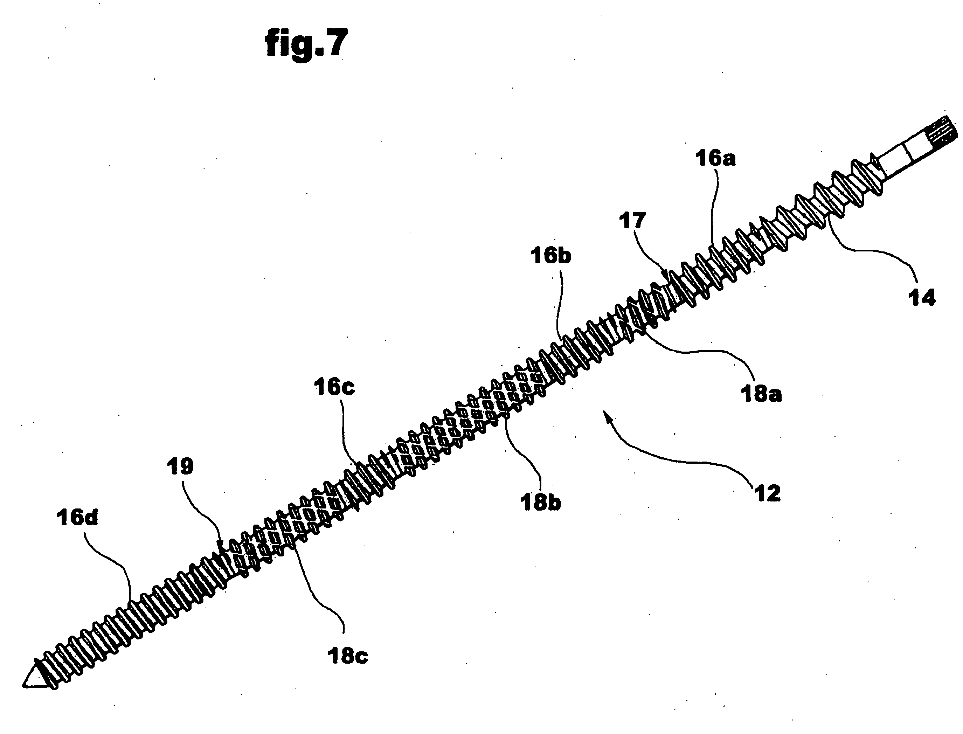

With reference to Figure 1, a tubular extruder body is generally indicated 10, with two co-rotating, interpenetrating screws 12, having the characteristics described above, arranged in the internal cavity thereof. The polymeric material is fed into the cavity of the extruder in an initial delivery area 14 of the screw, by supply means which are not illustrated. The screws 12 include (see Figure 7) four pumping areas 16a, b, c and d spaced by three back-mixing areas 18a, b, and c.

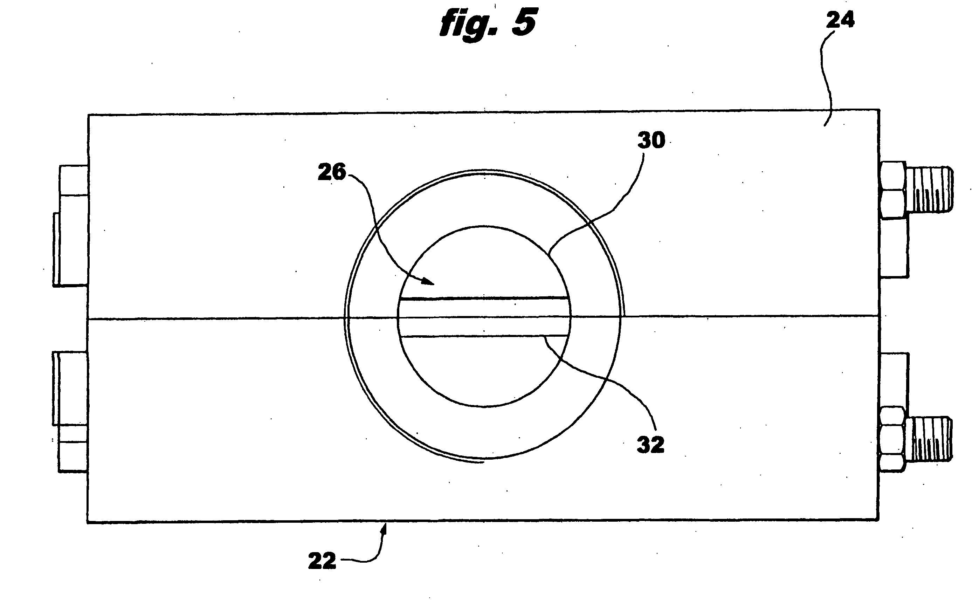

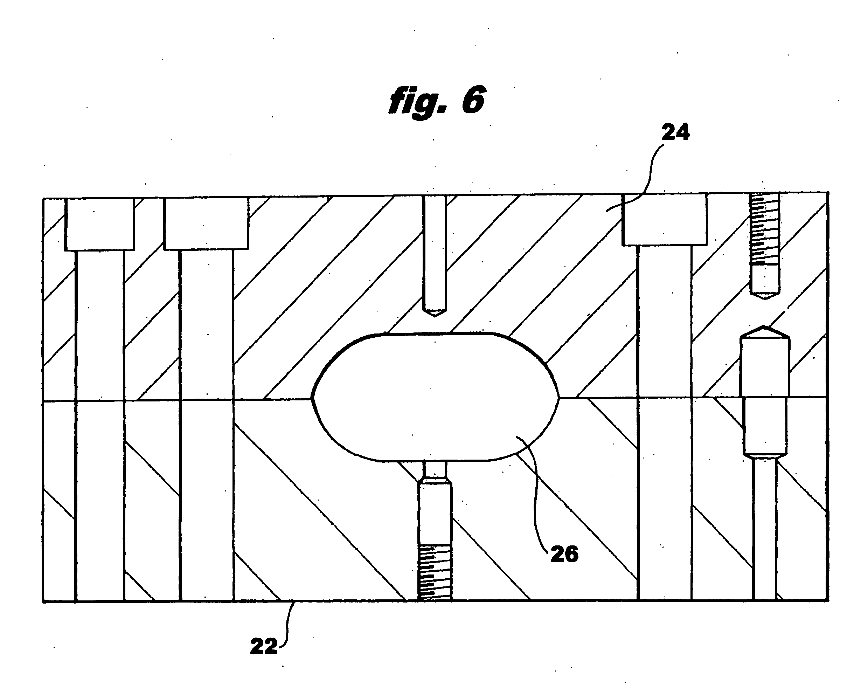

Downstream of the first pumping area 16a (see reference number 17), the screws 12 preferably have an increase in core diameter of between 7 and 14 % and a decrease in external diameter of between 4 and 8% and, downstream of the final mixing area 18c (see reference number 19) an increase in core diameter of between 2 and 5 % and a decrease in external diameter of between 1 and 3 %. These variations are not immediately apparent from any of Figures 1 to 7, owing to the scale of the drawings and to the fact that they are relatively small.

The material is melted in the initial feeder area 14 and transport area 16a; the expansion agent is preferably introduced into the extruder body by injector means, which are not illustrated, in the flow area 16b, immediately downstream of the first back-mixing area 18a.

The pressure at the head of the extruder is between 200 and 280 bar, preferably between 240 and 280 bar. It is clear that the temperature inside the extruder will be managed by the operator in dependence on the specific characteristics of the polymer being used.

On leaving the final flow/pumping area 16d, the melted polymeric material is fed to a static mixer/homogenizer unit 20. This unit can be of a known type and would preferably consist of the device described in U.S. Patent A-4 222 729 in the name of the Applicant.

In any case, when using the method of the invention, it is preferable for the characteristics of the static mixer unit to be such that it generates a pressure drop of between 30 and 80 bar.

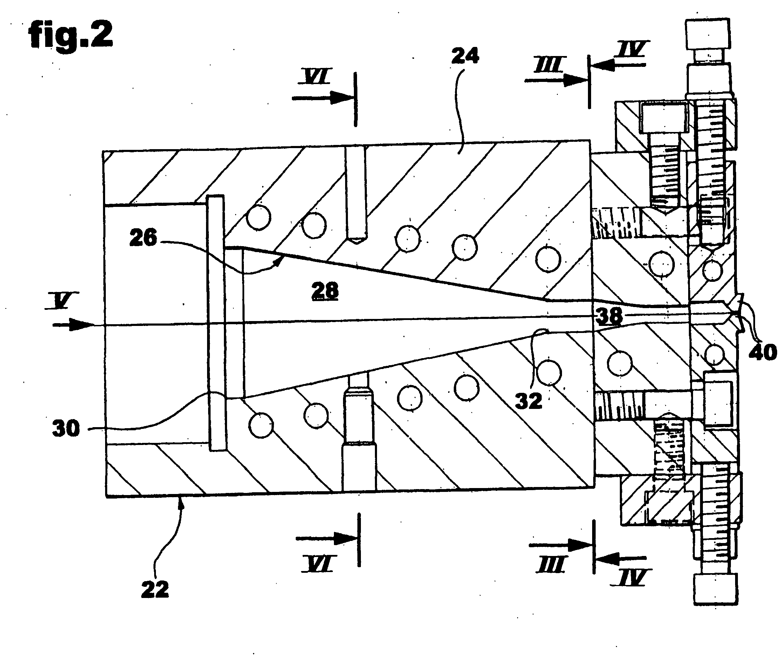

On leaving the static mixer 20, the material is finally fed to a die 22 (see Figures 2 to 6), generally at a pressure of between 100 and 200 bar.

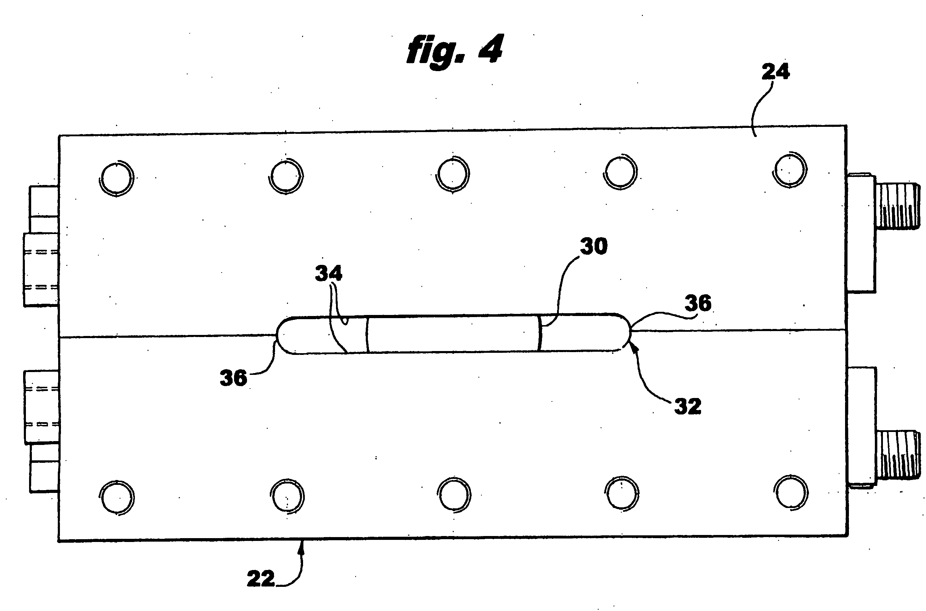

The die 22 has a body 24 with an internal passage 26 for the material to flow through, the cross section of the first portion 28 thereof (see Figures 4, 5, and 6) changing progressively from a circular section 30 to a substantially rectangular section 32 in which one pair of sides 34 is significantly longer than the other pair of sides 36.

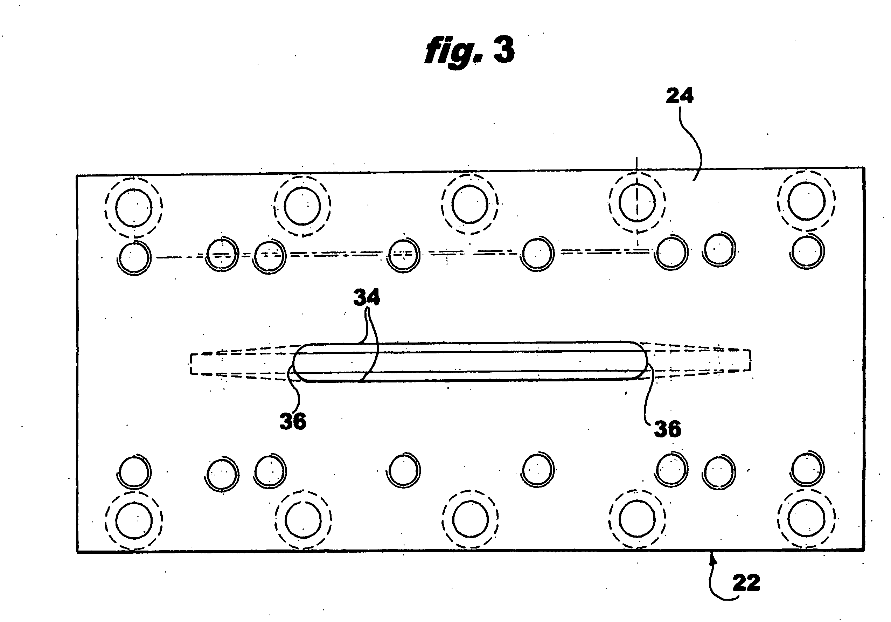

The passage 26 has a second portion 38, arranged downstream of the first portion 28, with the cross section thereof (see Figure 3) changing progressively by further lengthening of the sides 34 and shortening of the sides 36.

Finally, two facing lips 40 (see Figure 2) are arranged at the external outlet of the exit passage 26, which cause a reduction in the flow cross section of the passage 28.

### Example I

A co-rotating twin screw extruder was used, with screws having the characteristics described earlier and a length to diameter L/D ratio of 24. Further characteristics of the screws are as follows:
- axial separation I: 100 mm
- screw diameter D: 132 mm
- available power: 75 kW.

The polymeric material used was polystyrene with a melt index of between 1,7 and 1,8 g/10min with Vicat point above 100C°.

The material used also included from 0.5 to 1.5% by weight of talc as nucleising agent, from 4 to 5% of a flame-retardant agent and a colouring agent. Pure carbon dioxide was used as the expansion agent, with different percentages of expansion agent being used during the trial, ranging from 2 to 5 % for 100 parts of solid material.

The speed of rotation of the screws was varied during the trial between 18 and 25 rpm.

Pressure at the head of the extruder was maintained at between 200 and 280 bar, with pressure in the die between 100 and 200 bar.

Panels of expanded material were obtained with:
- a width varying between 600 and 800 mm;
- a thickness between 20 and 60 mm;
- a density varying between 35 and 50 kg/m³;
- a cell dimension varying between 0.150 and 0.250 mm.

The coefficient of thermal conductivity was found to vary, immediately after extrusion, between values of between 26.5 and 28.2 mW/°K*m.

These variations are caused determined by the different percentages of expansion agent and of nucleising agent used.

At least 95% of the expanded panels which were obtained had a closed cell structure, determined by ASTM D 2856-A.

The productivity ratio (available power/kilogram of product) ranged between 0.4 and 0.6 kW/kg.

### Example II

A co-rotating twin-screw extruder was used, with the screws being of the same type as those used above, with additional characteristics as follows:
- axial separation I: 66 mm
- screw diameter D: 82 mm
- available power 18 kW.

The same polymeric material was used as for Example I, once again varying the quantity of expansion agent between 2 and 5%.

Pressure at the extruder head was varied between 200 and 280 bar, while pressure at the die ranged between 100 and 120 bar.

Panels of expanded material were obtained with:
- a width of between 200 and 450 mm;
- a thickness of between 10 and 25 mm;
- a density of between 35 and 50 kg/m³;
- a cell dimension of between 0.150 and 0.250 mm.

## Claims

1. A method for the production of expanded materials by extrusion of a polymeric material with the addition of a physical expansion agent, wherein extrusion is carried out in a twin-screw extruder with co-rotating and interpenetrating screws (12), with a ratio between axial spacing (I) and diameter (D) of between 0.7 and 0.8 and a length/diameter ratio (L/D) of between 22 and 30 and in which the said screws (12) are rotated at a speed below 50 rpm, said method being **characterised in that** it is intended for the production of expanded polyolefin materials having a coefficient of thermal conductivity below 40 mW/°K*m and a density of below 50 kg/m³, and the said screws (12) have a plurality of mixing areas (18a-c) and a plurality of alternating pumping areas (16a-d) with a length ratio between mixing areas (18a-c) and pumping areas (16a-d) of between 65% and 75%.

2. A method according to Claim 1, **characterised in that**, downstream of the first pumping area (16a), the diameter of the core of the said screws (12) increases by between 7 and 14% while the external diameter decreases by between 4 and 8%.

3. A method according to either of the preceding Claims, **characterised in that**, downstream of the final mixing area (18c), the diameter of the core of the said screws (12) increases by between 2 and 5% while the external diameter decreases by between 1 and 3%.

4. A method according to any preceding Claim, **characterised in that** a die (22) is arranged downstream of the extruder, having a body (24) with an internal passage (26) for the material to flow through, the section of the first portion (28) thereof changing from a circular section (30) to a substantially rectangular section (32), in which one pair of sides (34) is significantly longer than the other pair of sides (36).

5. A method according to Claim 4, **characterised in that** the said passage (26) has a second portion (38), arranged downstream of the first (28), the section of which further changes, with the sides (34) being longer and the sides (36) being shorter.

6. A method according to any preceding Claim, **characterised in that** two facing lips (40) are formed at the outlet of the transit passage (26) which restrict the flow cross section of the said passage (26).

7. An extruder for carrying out a method according to any preceding Claim, which includes two co-rotating, interpenetrating screws (12), wherein the ratio between axial separation (I) and diameter (D) of the said screws (12) lies between 0.7 and 0.8 and the length/diameter ratio (L/D) lies between 22 and 30, the said extruder being **characterised in that** the screws have a plurality of mixing areas (18a-c) and a plurality of alternating pumping areas (16a-d) with a length ratio between mixing areas (18a-c) and pumping areas (16a-d) of between 65% and 75%.

8. An extruder according to Claim 7, **characterised in that**, downstream of the first pumping area (16a), the diameter of the core of the said screws (12) increases by between 7 and 14% while the outer diameter decreases by between 4 and 8%.

9. An extruder according to Claim 7 or 8, **characterised in that**, downstream of the final mixing area (18c) the core diameter of the said screws (12) increases by between 2 and 5 % while the external diameter decreases by between 1 and 3%.

## Patentansprüche

1. Verfahren für die Herstellung von geschäumten Materialien durch das Extrudieren eines polymeren Materials unter Beigabe eines physikalischen Schäummittels, wobei die Extrusion in einem Doppelschnecken-Extruder mit gemeinsam rotierenden und ineinander eingreifenden Schnecken (12) mit einem Verhältnis zwischen dem axialen Abstand (I) und dem Durchmesser (D) zwischen 0,7 und 0,8 und einem Verhältnis von Länge zu Durchmesser (L/D) zwischen 22 und 30 ausgeführt wird, und wobei die Schnecken (12) mit einer Drehzahl unter 50 UpM in Drehung versetzt werden, wobei das Verfahren **dadurch gekennzeichnet ist, dass** es für die Herstellung von geschäumten Polyolefin-Materialien vorgesehen ist, die einen Wärmeleitungskoeffizienten unter 40 mW/°K*m und eine Dichte unter 50 kg/m³ besitzen, und die Schnecken (12) eine Vielzahl von Mischbereichen (18a-c) sowie eine Vielzahl von abwechselnden Transportbereichen (16a-d) besitzen, wobei das Längenverhältnis zwischen den Mischbereichen (18a-c) und den Transportbereichen (16a-d) zwischen 65% und 75% liegt.

2. Verfahren gemäß Anspruch 1, **dadurch gekennzeichnet, dass** stromabwärts des ersten Transportbereichs (16a) der Durchmesser des Kerns der Schnecken (12) zwischen 7 und 14% zunimmt, während der Außendurchmesser zwischen 4 und 8% abnimmt.

3. Verfahren gemäß irgendeinem der bisherigen Ansprüche, **dadurch gekennzeichnet, dass** stromabwärts des Mischendbereichs (18c) der Durchmesser des Kerns der Schnecken (12) zwischen 2 und 5% zunimmt, während der Außendurchmesser zwischen 1 und 3% abnimmt.

4. Verfahren gemäß irgendeinem der bisherigen Ansprüche, **dadurch gekennzeichnet, dass** eine Pressdüse (22) stromabwärts des Extruders angeordnet ist, die einen Körper (24) mit einem inneren Kanal (26), damit das Material durchströmen kann, besitzt, wobei sich der Querschnitt des ersten Teils (28) des Kanals von einem kreisförmigen Querschnitt (30) zu einem im Wesentlichen rechteckigen Querschnitt (32) ändert, bei dem ein Paar von Seiten (34) wesentlich länger als das andere Paar von Seiten (36) ist.

5. Verfahren gemäß Anspruch 4, **dadurch gekennzeichnet, dass** der Kanal (26) einen zweiten Teil (38) besitzt, der stromabwärts des ersten Teils (28) angeordnet ist, wobei sich sein Querschnitt weiter ändert, wobei die Seiten (34) länger und die Seiten (36) kürzer werden.

6. Verfahren gemäß irgendeinem der bisherigen Ansprüche, **dadurch gekennzeichnet, dass** zwei einander gegenüber liegende Lippen (40) am Auslass des Durchlasskanals (26) ausgebildet sind, die den Strömungsquerschnitt dieses Kanals (26) einengen.

7. Extruder für das Ausführen eines Verfahrens gemäß irgendeinem der bisherigen Ansprüche, wobei der Extruder zwei gemeinsam rotierende, ineinander eingreifende Schnecken (12) aufweist, wobei das Verhältnis zwischen dem axialen Abstand (I) und dem Durchmesser (D) der Schnecken (12) zwischen 0,7 und 0,8 und das Verhältnis von Länge zu Durchmesser (L/D) zwischen 22 und 30 liegt, wobei der Extruder **dadurch gekennzeichnet ist, dass** die Schnecken eine Vielzahl von Mischbereichen (18a-c) sowie eine Vielzahl von abwechselnden Transportbereichen (16a-d) besitzen, wobei das Längenverhältnis zwischen den Mischbereichen (18a-c) und den Transportbereichen (16a-d) zwischen 65% und 75% liegt.

8. Extruder gemäß Anspruch 7, **dadurch gekennzeichnet, dass** stromabwärts des ersten Transportbereichs (16a) der Durchmesser des Kerns der Schnecken (12) zwischen 7 und 14% zunimmt, während der Außendurchmesser zwischen 4 und 8% abnimmt.

9. Extruder gemäß Anspruch 7 oder 8, **dadurch gekennzeichnet, dass** stromabwärts des Mischendbereichs (18c) der Kerndurchmesser der Schnecken (12) zwischen 2 und 5% zunimmt, während der Außendurchmesser zwischen 1 und 3% abnimmt.

## Revendications

1. Procédé pour la production de matériaux expansés par extrusion d'un matériau polymère avec l'ajout d'un agent d'expansion physique, dans lequel l'extrusion est effectuée dans une extrudeuse à double vis avec des vis co-rotatives et interpénétrantes (12), avec un rapport entre l'espacement axial (I) et le diamètre (D) compris entre 0,7 et 0,8 et un rapport longueur/diamètre (L/D) compris entre 22 et 30, et dans lequel lesdites vis (12) sont mises en rotation à une vitesse inférieure à 50 t/min, ledit procédé étant **caractérisé en ce qu'**il est destiné à la production de matériaux polyoléfines expansés ayant un coefficient de conductivité thermique inférieur à 40 mW/°K*m et une densité inférieure à 50 kg/m³, et lesdites vis (12) possèdent une pluralité de zones de mélange (18a-c) et une pluralité de zones de pompage alternantes (16a-d) avec un rapport de longueur entre les zones de mélange (18a-c) et les zones de pompage (16a-d) compris entre 65 % et 75 %.

2. Procédé selon la revendication 1, **caractérisé en ce que**, en aval de la première zone de pompage (16a), le diamètre de l'âme desdites vis (12) augmente de entre 7 % et 14 % tandis que le diamètre externe diminue de entre 4 % et 8 %.

3. Procédé selon l'une quelconque des revendications précédentes, **caractérisé en ce que**, en aval de la zone de mélange (18c), le diamètre du centre desdites vis (12) augmente de entre 2 % et 5 % tandis que le diamètre externe diminue de entre 1 % et 3 %.

4. Procédé selon l'une quelconque des revendications précédentes, **caractérisé en ce qu'**un moule (22) est disposé en aval de l'extrudeuse, ayant un corps (24) avec un passage interne (26) pour que le matériau s'écoule à travers, la section de la première portion (28) de celui-ci évoluant d'une section circulaire (30) à une section essentiellement rectangulaire (32), dans lequel une paire de côtés (34) est significativement plus longue que l'autre paire de côtés (36).

5. Procédé selon la revendication 4, **caractérisé en ce que** ledit passage (26) possède une seconde portion (38) disposée en aval de la première (28), dont la section change encore, avec les côtés (34) qui sont plus longs et les côtés (36) qui sont plus courts.

6. Procédé selon l'une quelconque des revendications précédentes, **caractérisé en ce que** deux lèvres se faisant face (40) sont formées à la sortie du passage de transit (26), qui restreignent la section transversale d'écoulement dudit passage (26).

7. Extrudeuse pour mettre en oeuvre un procédé selon l'une quelconque des revendications précédentes, qui comprend deux vis co-rotatives, interpénétrantes (12), dans laquelle un rapport entre la séparation axiale (I) et le diamètre (D) desdites vis (12) se situe entre 0,7 et 0,8 et le rapport longueur/diamètre (L/D) se situe entre 22 et 30, ladite extrudeuse étant **caractérisée en ce que** les vis possèdent une pluralité de zones de mélange (18a-c) et une pluralité de zones de pompage alternantes (16a-d) avec un rapport de longueur entre les zones de mélange (18a-c) et les zones de pompage (16a-d) compris entre 65 % et 75 %.

8. Extrudeuse selon la revendication 7, **caractérisée en ce que**, en aval de la première zone de pompage (16a), le diamètre de l'âme desdites vis (12) augmente de entre 7 % et 14 % tandis que le diamètre externe diminue de entre 4 % et 8 %.

9. Extrudeuse selon la revendication 7 ou 8, **caractérisée en ce que**, en aval de la zone de mélange (18c), le diamètre de l'âme desdites vis (12) augmente de entre 2 % et 5 % tandis que le diamètre externe diminue de entre 1 % et 3 %.
